# EUROPEAN PATENT APPLICATION

(11) **EP 1 280 089 A1**
(43) Date of publication of application: **29.01.2003**
(21) Application number: 00913014.7
(22) Date of filing: 31.03.2000
(51) Int. Cl.: G06F 19/00

(54) **GIFT CERTIFICATE DISTRIBUTION MANAGING METHOD AND GIFT CERTIFICATE**

(71) Applicant: Hitachi, Ltd., Chiyoda-ku, Tokyo 100-8220 (JP); Hitachi Credit Corporation, Minato-ku, Tokyo 105-8712 (JP)
(72) Inventor: IMAMURA, Masashi, Hitachi, Ltd., Kawasaki-shi, Kanagawa 211-8567 (JP); TOKUYAMA, Hideki, Hitachi, Ltd., Kawasaki-shi, Kanagawa 2111-8567 (JP); ITO, Atsushi, Hitachi, Ltd., Kawasaki-shi, Kanagawa 211-8567 (JP); YODEN, Takao, Minato-ku, Tokyo 105-8712 (JP)
(74) Representative: Strehl Schübel-Hopf & Partner
(86) International application number: JP0002068
(87) International publication number: WO01075763

(57) **Abstract**

To make it possible to judge the genuineness of a gift certificate more reliably, and to prevent the gift certificate efficiently from being used fraudulently.

There is used a gift certificate mounting therein an electronic circuit chip having specific identification data stored in a nonrewritable area. When a distribution managing center 5 receives an issue completion register request containing identification data of the electronic circuit chip from an issue procedure terminal 2, the distribution managing center 5 registers the gift certificate specified by the identification data, in a database as an issue-completed gift certificate. When the distribution managing center 5 receives a receipt completion register request containing the identification data of the electronic circuit chip from a receipt procedure terminal 3, the distribution managing center 5 checks whether or not the gift certificate specified by the identification data is registered in the database as the issue-completed gift certificate, and only if registered, updates the registered contents of the gift certificate in the database from the issue completion status to the receipt completion status. Then, the result of the updating is reported to the receipt procedure terminal 3.

## Description

### TECHNICAL FIELD

The present invention relates to a technique for managing the distribution of a gift certificate and, more particularly, to a gift certificate distribution managing technique for making it possible to efficiently prevent fraudulent use of the gift certificate

### BACKGROUND ART

In the prior art, there have been used various gift certificates such as book tickets, gift cards or beer tickets. Here, the gift certificates are securities which can be exchanged with either gifts having values equal to the face values printed on the sheet faces or gifts printed on the sheet faces. The gift certificates are used up (when exchanged with the gifts) and are collected from the market. Specifically, the gift certificates has a feature that are so different from coins or bills that they are collected, when once used, from the market and cannot be used anymore.

In order to gain the sales of a gift sold, a gift seller has to ask the issuer of the gift certificate to cash the gift certificate which has been received from a gift purchaser for that sold gift. When the gift certificate is used, more specifically, the sum according to the value of the gift certificate is transferred between the gift seller having allowed the use of the gift certificate and the issuer having issued the gift certificate. In the prior art, the cashing of the gift certificate received from the gift purchaser has been performed according to the following procedure.

Specifically, the gift seller visually checks the genuineness of the gift certificate presented by the gift purchaser, and admits the use of only a genuine gift certificate and receives the gift certificate for the gift. The gift certificate thus received for a predetermined time period from the gift purchaser are stored altogether so that a document (or a table) for the cashing procedure is created by accumulating the gift certificates stored. Moreover, the stored gift certificates are divided into halves, one of which is stored and the other of which is sent together with the table to the issuer.

On the other hand, the issuer registers the gift certificate numbers (which are printed on the sheet faces of the gift certificates) of the gift certificates issued by himself in a database. Moreover, the gift certificates (or their halves) sent from the gift seller are visually checked on their genuineness, and only the genuine gift certificates are checked on whether or not their numbers printed on the gift sheet faces are registered in the database. If registered, the numbers are deleted from the database, and the sums according to the values of the gift certificates of those numbers are then paid to the account of the gift seller.

### DISCLOSURE OF THE INVENTION

The aforementioned gift certificate cashing procedure of the prior art has the following problems.

Specifically, the gift seller stores all the gift certificates received from the gift purchaser for a predetermined time period, and sends the stored gift certificates altogether to the issuer. If the gift certificate, which has been visually judged to be genuine and received from the gift purchaser for the gift by the gift seller, is visually judged to be fraudulent by the issuer, or if the number of that gift certificate is not registered in the database but the gift certificate is judged to have been highly possibly used fraudulently, it is, therefore, seriously difficult to search the gift purchaser having used that gift certificate. In this case, the gift seller and/or the issuer have to suffer the loss accompanying the gift sales.

Here, the method for preventing the securities or credit cards from being forged is exemplified by one using the achromatic hologram, as disclosed in JP-A-No. 8-95478. According to this method, an achromatic hologram difficult to forge is applied to the surfaces of securities or credit cards so that the genuineness is judged by confirming the achromatic hologram visually. As the copy technique of recent years has drastically progressed, however, it- is becoming possible to forge the hologram. Thus, it is becoming seriously difficult to judge the genuineness of the gift certificate visually.

In the aforementioned procedure of cashing the gift certificate in the prior art, on the other hand, a long time is taken from the receipt of the gift certificate from the gift purchaser to the cashing of the gift certificate. Therefore, the gift seller may be possibly troubled in securing an operating capital for purchasing the gifts.

The present invention has been conceived in view of the backgrounds thus far described and has an object to make it possible to judge the genuineness of a gift certificate more reliably than the visual judgment of the prior art and to prevent the fraudulent use of the gift certificate efficiently.

Another object of the present invention is to shorten the time period from the receipt of a gift certificate to the cashing of the gift certificate by reducing the troubles involved for cashing the gift certificate.

In order to achieve the above-specified objects, a gift certificate to be used in the present invention has such an electronic circuit chip mounted therein that the data can be read from the outside. Moreover, the electronic circuit chip is provided with a nonrewritable storage area, in which the data (e.g., a serial number or a verification code) specific to each electronic circuit chip is stored as externally readable data.

In the present invention, on the other hand, there is provided a distribution managing center for managing the distribution state of such gift certificate, and the distribution managing center is connected through a network with the terminal of an issuer of the gift certificate and the terminal of a gift seller. Moreover, when an issue completion register request containing the data specific to the electronic circuit chip mounted on the gift certificate is sent from the issuer side terminal, the gift certificate specified by the data specific to the electronic circuit chip is registered in the database as an issue-completed gift certificate. When a receipt completion register request containing the data specific to the electronic circuit-chip mounted in the gift certificate is sent from the terminal of the gift seller side, on the other hand, the distribution managing center is caused to check whether or not the gift certificate specified by the data specific to the electronic circuit chip is registered in the database as the issue-completed gift certificate and, only if registered, to update the registered contents of the gift certificate in the database from the issue completion status to the receipt completion status. Moreover, the distribution managing center is caused to report the result of the registration to the terminal of the gift seller.

According to the present invention, gift certificate has the electronic circuit chip mounted thereon storing the specific data in the nonrewritable area. If the data stored in the electronic circuit chip mounted in that gift certificate is read out when printing the gift certificate to print the data or its related information on the sheet face of that gift certificate, therefore, the gift seller is enabled to judge the genuineness of the gift certificate more reliablyby reading the specific data from the electronic circuit chip mounted in the gift certificate by means of the terminal and by comparing the data to the data or information printed on the sheet face.

Here, the specific data is stored in the nonrewritable area of the electronic circuit chip, as described above, so that an illegal third party cannot modify the data stored in the electronic circuit chip. Without sufficient facilities, on the other hand, it is impossible to manufacture the electronic circuit chip itself. As the electronic circuit chip is made the smaller and the thinner, the number of parties capable of manufacturing the electronic circuit chip is the more restricted. Therefore, the possibility of forging the gift certificate can be made further lower than that of the prior art.

In the present invention, when the receipt completion register request is sent from the terminal of the gift seller side, the distribution managing center checks whether or not the gift certificate specified by the specific data contained in that request is registered in the database as an issue-completed gift certificate and, only if registered, updates the registered contents of the gift certificate in the database from the issue completion status to the receipt completion status, and reports the result of the registration to the terminal of the gift seller. Therefore, the gift seller is enabled to know whether or not the use of the gift certificate is valid, before the exchange of the gift certificate with the gift by reading the specific data from the electronic circuit chip mounted in the gift certificate by using that terminal before exchanging the gift with the gift certificate presented by the gift purchaser, and by transmitting the receipt completion register request containing that data to the distribution managing center. Therefore, it is possible to prevent the gift certificate efficiently from being used fraudulently.

Here in the present invention, the distribution managing center may be connected through the network with a settling system for money transfers between the accounts of banking organs. Moreover, the distribution managing center may transmit to the settling system a settlement request containing data for specifying an account of the gift seller of the terminal having transmitted the receipt completion register request and may ask the settling system for the money transfers according to the gift certificate registered in the database, between the account of the gift seller and the account of the issuer.

Thus, the troubles involved in the cashing procedure of the gift certificate can be made less than those of the prior art. It is also possible to shorten the time period from the receipt of the gift certificate by the gift seller to the cashing of the gift certificate.

### BRIEF DESCRIPTION OF THE DRAWINGS

Fig. 1 presents diagrams showing examples of a gift certificate to be used in a distribution managing system of the present embodiment.
Fig. 2 presents diagrams for explaining an electronic circuit chip 101 to be mounted in the gift certificate 100 shown in Fig. 1.
Fig. 3 is a schematic diagram of the distribution managing system of the gift certificate, to which the present embodiment is applied.
Fig. 4 is a schematic diagram showing a functional construction of a print procedure terminal 1 shown in Fig. 3.
Fig. 5 is a schematic diagram showing a functional construction of an issue procedure terminal 2 shown in Fig. 3.
Fig. 6 is a schematic diagram showing a functional construction of a receipt procedure terminal 3 shown in Fig. 3.
Fig. 7 is a schematic diagram showing a functional construction of a collection procedure terminal 4 shown in Fig. 3.
Fig. 8 is a schematic diagram showing a functional construction of a distribution managing center 5 shown in Fig. 3.
Fig. 9 is a diagram for explaining the distribution managing information of individual gift certificates 100 to be stored in a gift certificate distribution status managing database 51 of the distribution managing center 3shown in Fig. 8.
Fig. 10 is a diagram showing a hardware construction example of each of the devices 1 to 5 constructing the distribution managing system shown in Fig. 3.
Fig. 11 is a flow chart for explaining operationsof the distribution managing center 5 shown in Fig. 8, schematically.
Fig. 12 is a flow chart for explaining the processing of Step S1003 (Print completion Register Procedure) shown in Fig. 11.
Fig. 13 is a flow chart for explaining the processing of Step S1004 (Issue completion Register Procedure) shown in Fig. 11.
Fig. 14 is a flow chart for explaining the processing of Step S1005 (Receipt completion Register Procedure) and Step S1006 (Settlement Request Procedure) shown in Fig. 11.
Fig. 15 is a flow chart for explaining the processing of Step S1007 (Collection completion Register Procedure) shown in Fig. 11.
Fig. 16 is a flow chart for explaining the operation of the print procedure terminal 1.
Fig. 17 is a flow chart for explaining the operations of the issue procedure terminal 2.
Fig. 18 is a flow chart for explaining the oprations of the receipt procedure terminal 3.
Fig. 19 is a flow chart for explaining the operations of the collection procedure terminal 4.
Fig. 20 is a diagram showing another example of the gift certificate to be used in the distribution managing system of the present embodiment.

### BEST MODE FOR CARRYING OUT THE INVENTION

A distribution managing system of the gift certificate, to which one embodiment of the present invention is applied will be described in the following.

First of all, the description will be made on a gift certificate to be used in the distribution managing system of the present embodiment.

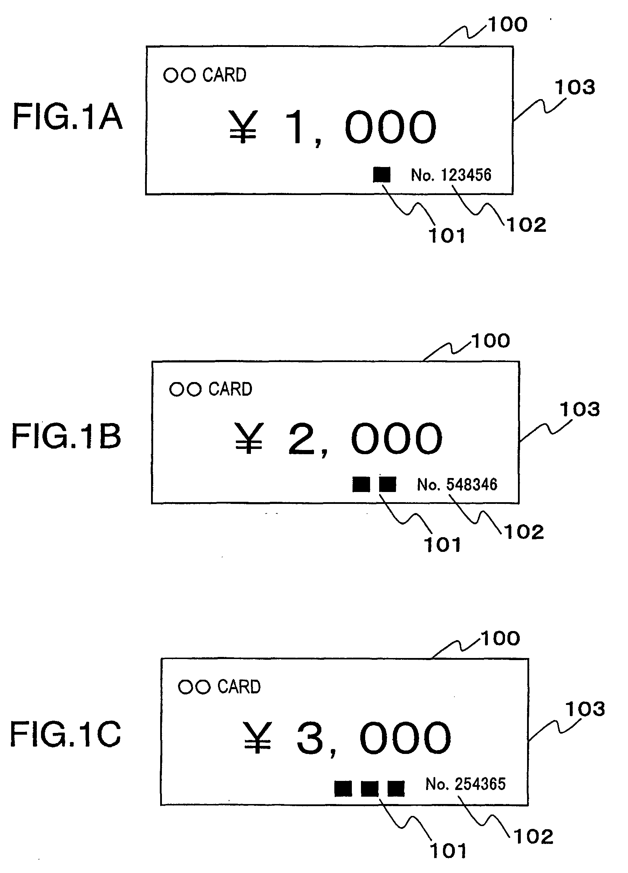

Fig. 1 presents examples of the gift certificate to be used in the distribution managing system of the present embodiment.

As shown, the gift certificate 100 to be used in the present embodiment is constructed by mounting electronic circuit chips 101 the number of which is decided according to the face value of the gift certificate 100 in a paper 103 therefor. In the example shown in Fig. 1, the number of the electronic circuit chips 101 mounted is according to the face value of the gift certificates, based on a Unit value of ¥ 1,000. However, the construction is not limited to this. For example, the number of the electronic circuit chips 101 may be increased as the face value of the gift certificate goes up, such that one electronic circuit chip 101 is mounted for the face value of ¥ 1,000, two electronic circuit chips 101 for ¥ 5, 000, and three electronic circuit chips 101 for ¥ 10,000. Thus, the securities can be strongly set according to the face value.

Here, the electronic circuit chip 101 may also be mounted in the gift certificate paper 103 such that the manufacturer of the gift certificate paper 103 leaves the electronic circuit chip 101 in the paper 103 when the manufacturer makes this paper 103. Alternatively, the electronic circuit chip 101 may be applied or by adhesion etc. to the face of the gift certificate paper 103 manufactured.

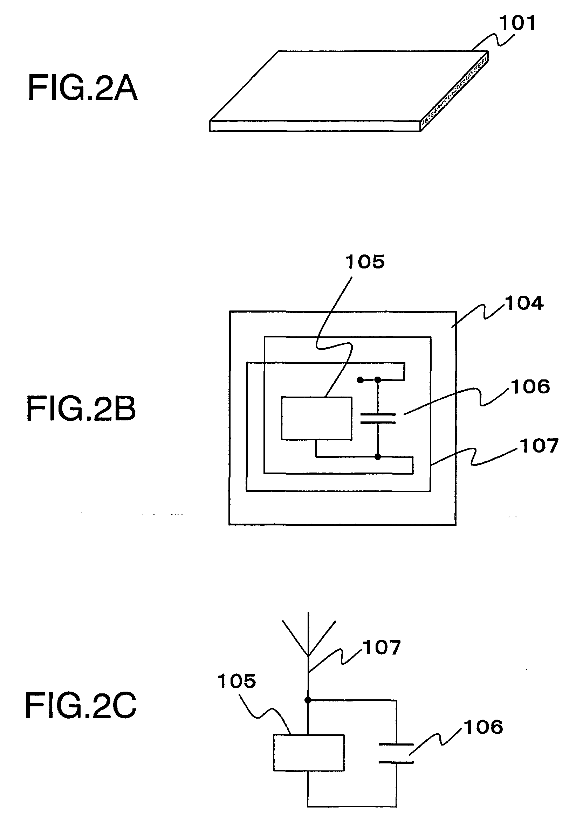

The electronic circuit chip 101 is, for example, such a chip of 0.3 mm square as cannot be manufactured by those other than a semiconductor manufacturer having sufficient facilities, as shown in Fig. 2(a), and has a generally rectangular parallelepiped shape of a thin type. As shown in Fig. 2(b), the chip is constructed by forming a memory, an electronic circuit 105 functioning as a memory and a reading circuit, a capacitor 106 and an antenna 107 over a silicon chip 104. Here, the memory includes a nonrewritable memory portion. In this nonrewritable memory portion, there is stored data which has been encrypted from identification data (e.g., a serial number or verification code ) specific to each electronic circuit chip 101.

Here, the storage of the encrypted identification data in the nonrewritable memory portion of the electronic circuit 105 is carried out in advance before the manufacturer of the electronic circuit chip 101 ships the chip 101 to the manufacturer of the gift certificate paper 103. Here, the nonrewritable memory portion of the electronic circuit 105 includes not only the nonrewritable memory such as the ROM but also a rewritable memory such as the EEPROM, in which the portion where encrypted identification data has been written is set nonrewritable.

The electronic circuit 105, the capacitor 106 and the antenna 107 construct a circuit, as shown in Fig. 2(c). In this circuit, an electric current is induced in the antenna 107 with electric waves fed from the outside, and the electric charges are stored in the capacitor 106. By using an electric power obtained from the charges stored in the capacitor 106, the information stored in the electronic circuit 105 is transmitted through electric waves from the antenna 107. Namely, the encrypted identification data stored in the electronic circuit 105 of the electronic circuit chip 101 can be read out in the noncontact manner from the outside by applying the electric waves to the electronic circuit chip 101.

Reverting now to Fig. 1, on the paper 103 of the gift certificate 100 the face value and the gift certificate number 102 specific to each gift certificate 100 are printed. In the present embodiment, the printing componay of the gift certificate 100 acquires the gift certificate paper 103 from the manufacturer of the paper 103 and carries out the printing.

Next, the construction of the distribution managing system for managing the gift certificate distribution by using the gift certificate 100 thus far described will be described.

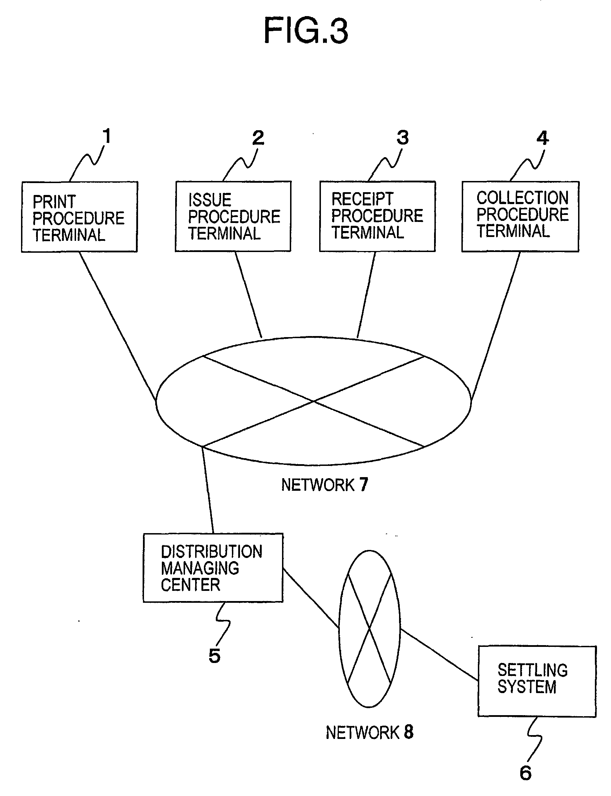

Fig. 3 is a schematic diagram of the distribution managing system of the gift certificate, to which the present embodiment is applied.

As shown, the gift certificate distribution managing system of the present embodiment is constructed such that a print procedure terminal 1, an issue procedure terminal 2, a receipt procedure terminal 3, a collection procedure terminal 4 and a distribution managing center 5 are connected to a network 7 such as a dedicated network or an internet. Here, the terminals 1 to 4 may be plural, although they are individually only one in the example shown in Fig. 3. The distribution managing center 5 is connected through a network 8 such as a dedicated network or an internet to a settling system 6 for money transfer between the accounts of banking organs. Here, the settling system 6 may be the existing one capable of transferring money online between the accounts of the banking organs. Moreover, the network 7 and the network 8 may be identical to each other.

The print procedure terminal 1 is theterminal of the printing company of the gift certificate 100 and is used to report it to the distribution managing center 5 when the printing company of the gift certificate 100 prints predetermined information (e.g., the face value or the gift certificate number 102) on the gift certificate paper 103 acquired from the manufacturer of the paper 103.

The issue procedure terminal 2 is theterminal of the issuing company of the gift certificate 100 and is used to report it to the distribution managing center 5 when the issuing company of the gift certificate 100 issues the printed gift certificate 100 acquired from the printing company of the gift certificate 100 to enable a gift purchaser to use the gift certificate 100.

The receipt procedure terminal 3 is theterminal of the gift selling company for allowing the gift purchaser to use the gift certificate and is used to report it to the distribution managing center 5 when the gift selling company receives the gift certificate 100 for the gift from the gift purchaser.

The collection procedure terminal 4 is theterminal of the collecting company of the gift certificate 100 and is used to report it to the distribution managing center 5 when the received gift certificate 100 is collected from the gift selling company to disable the gift purchaser to use the collected gift certificate 100.

When the issuing company of the gift certificate 100 collects the gift certificate 100, too, the collection procedure terminal 4 may be omitted by giving the issue procedure terminal 2 the function of the collection procedure terminal 4. When the issuing company of the gift certificate 100 prints the gift certificate 100 on the gift certificate paper 103 , too, the print procedure terminal 1 may also be omitted by giving the issue procedure terminal 2 the function ofthe print procedure terminal 1.

The distribution managing center 5 manages the distribution status of the gift certificate 100 in accordance with the reports from the individual terminals 1 to 4. This management detects frauds such as the double use or forgery of the gift certificate 100. Moreover, the gift selling company asks the settling system 6 for the money transfer between the account of the issuing company of the gift certificate 100 and the account of the gift selling company and according to the face value of that gift certificate 100 regarding to the gift certificate 100 received for the gift from the gift purchaser. As a result, the issuing company of the gift certificate 100 is caused to pay the money according to the face value of the gift certificate 100, to the account of the gift selling company.

Next, the individual devices which construct the above-described distribution managing system will be described.

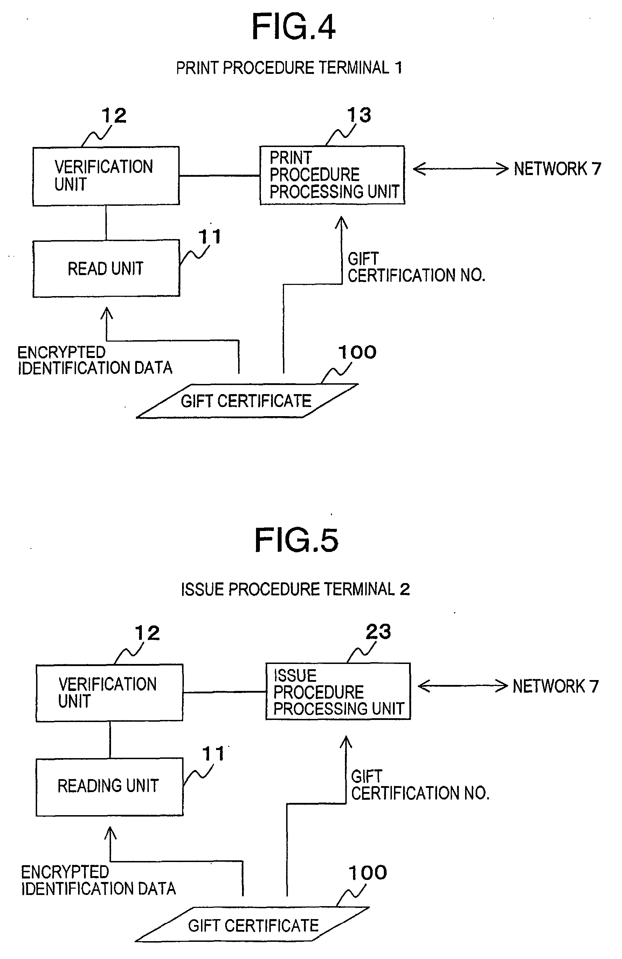

Fig. 4 is a schematic diagram showing a functional construction of the print procedure terminal 1.

As shown, the print procedure terminal 1 comprises a read unit 11, a verification unit 12 and a print procedure processing unit 13.

The read unit 11 transmits electric waves to drive the electronic circuit chip 101 mounted in the gift certificate 100. Then, the read unit 11 receives the encrypted identification data transmitted from the electronic circuit chip 101.

The verification unit 12 decodes the encrypted identification data received from the electronic circuit chip 101 by the read unit 11, according to the encryption system used by the manufacturer of the electronic circuit chip 101 for encrypting the identification data, and verifies the identification data on the basis of the decoded result. The specific method for the identification data verification will be described later.

The print procedure processing unit 13 reports to the distribution managing center 5 the print completion register request of the gift certificate 100, which mounts the electronic circuit chip 101 judged to be genuine at the verification unit 12. Specifically, the print completion register request containing the identification data decoded at the verification unit 12, the gift certificate number 102 to be or having been printed on the gift certificate 100, mounting therein the electronic circuit chip 101 storing the identification data, and the information of the printing company of the gift certificate is created and transmitted through the network 7 to the distribution managing center 5.

Here, the gift certificate number 102 may be either created automatically by the print procedure processing unit 13 or acquired from an operator of the print procedure terminal 1 through an input device such as keyboard or mouse. When the print procedure processing unit 13 creates the gift certificate number 102 automatically, the print procedure terminal 1 is associated with the gift certificate printer(not-shown) so that the automatically created gift certificate number 102 may be printed together with other necessary information on the paper 103 of the gift certificate 100. If the processing by the print procedure terminal 1 is performed on the gift certificate 100, the number 103 of which has already been printed on the gift certificate paper 103, the gift certificate number 102 printed on the gift certificate 100 may also be acquired by reading the number 102 optically to recognize the characters by means of the OCR.

Fig. 5 is a schematic diagram showing a functional construction of the issue procedure terminal 2. Here, the parts having the same functions as those of the print procedure terminal 1 shown in Fig. 4 are designated by the same reference numerals.

As shown, the issue procedure terminal 2 comprises the read unit 11, the verification unit 12 and an issue procedure processing unit 23.

The issue procedure processing unit 23 reports to the distribution managing center 5 an issue completion register request of the gift certificate 100, which mounts thereinthe electronic circuit chip 101 judged to have the genuine data by the verification unit 12. Specifically, the issue completion register request containing the identification data decoded at the verification unit 12, the gift certificate number 102 printed on the gift certificate 100, mounting therein the electronic circuit chip 101 stored with the identification data, and the information of the issuing company of the gift certificate is created and is transmitted to the distribution managing center 5 through the network 7. Like the print procedure terminal 1, the gift certificate number 102 may be acquired from the operator of the issue procedure terminal 2 through the input device such as keyboard or mouse. Alternatively, the gift certificate number 102 printed on the gift certificate 100 may also be acquired by reading the number 102 optically to perform the character recognition by means of the OCR.

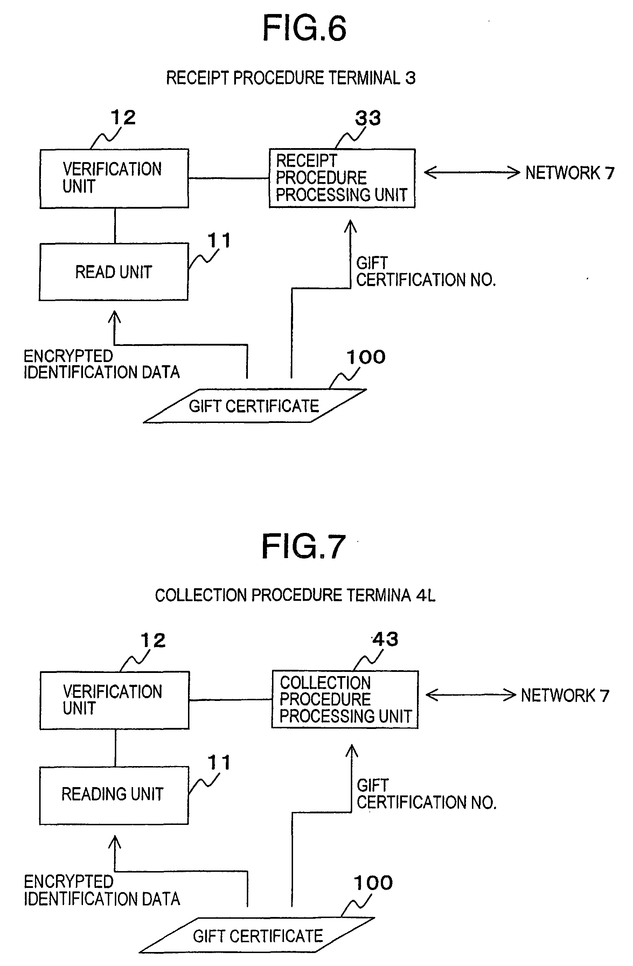

Fig. 6 is a schematic diagram showing a functional construction of the receipt procedure terminal 3. Here, the parts having the same functions as those of the print procedure terminal 1 shown in Fig. 4 are designated by the same reference numerals.

As shown, the receipt procedure terminal 3 comprises the read unit 11, the verification unit 12 and a receipt procedure processing unit 33.

The receipt procedure processing unit 33 reports to the distribution managing center 5 a receipt completion register request of the gift certificate 100, which mounts therein the electronic circuit chip 101 judged to have the genuine data by the verification unit 12. Specifically, the receipt completion register request containing the identification data decoded at the verification unit 12, the gift certificate number 102 printed on the gift certificate 100, mounting therein the electronic circuit chip 101 storing the identification data, and the information of the gift selling company of the gift certificate is created and is transmitted to the distribution managing center 5 through the network 7.

Like the print procedure terminal 1, the gift certificate number 102 may be acquired from the operator of the receipt procedure terminal 3 through the input device such as keyboard or mouse. Alternatively, the gift certificate number 102 printed on the gift certificate 100 may also be acquired by reading the number 102 optically to perform the character recognition by means of the OCR. Alternatively, the gift certificate number 102 may be acquired from the POS system (not-shown) by associating the present receipt procedure terminal 3 with the POS system.

Fig. 7 is a schematic diagram showing a functional construction of the collection procedure terminal 4. Here, the parts having the same functions as those of the print procedure terminal 1 shown in Fig. 4 are designated by the same reference numerals.

As shown, the collection procedure terminal 4 comprises the read unit 11, the verification unit 12 and a collection procedure processing unit 43.

The collection procedure processing unit 43 reports to the distribution managing center 5 a collection completion register request of the gift certificate 100, which mounts therein the electronic circuit chip 101 judged to have the genuine data by the verification unit 12. Specifically, the collection completion register request containing the identification data decoded at the verification unit 12, the gift certificate number 102 printed on the gift certificate 100, mounting therein the electronic circuit chip 101 storing the identification data, and the information of the collecting company of the gift certificate is created and is transmitted to the distribution managing center 5 through the network 7. Like the print procedure terminal 1, the gift certificate number 102 may be acquired from the operator of the collection procedure terminal 4 through the input device such as keyboard or mouse. Alternatively, the gift certificate number 102 printed on the gift certificate 100 may also be acquired by reading the number 102 optically to perform the character recognition by means of the OCR.

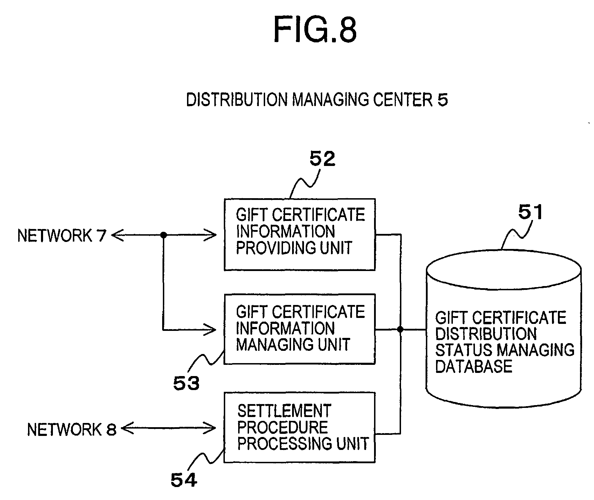

Fig. 8 is a schematic diagram showing a functional construction of the distribution managing center 5.

As shown, the distribution managing center 5 comprises a gift certificate distribution status managing database 51, a gift certificate information providing unit 52, a gift certificate information managing unit 53 and a settlement procedure processing unit 54.

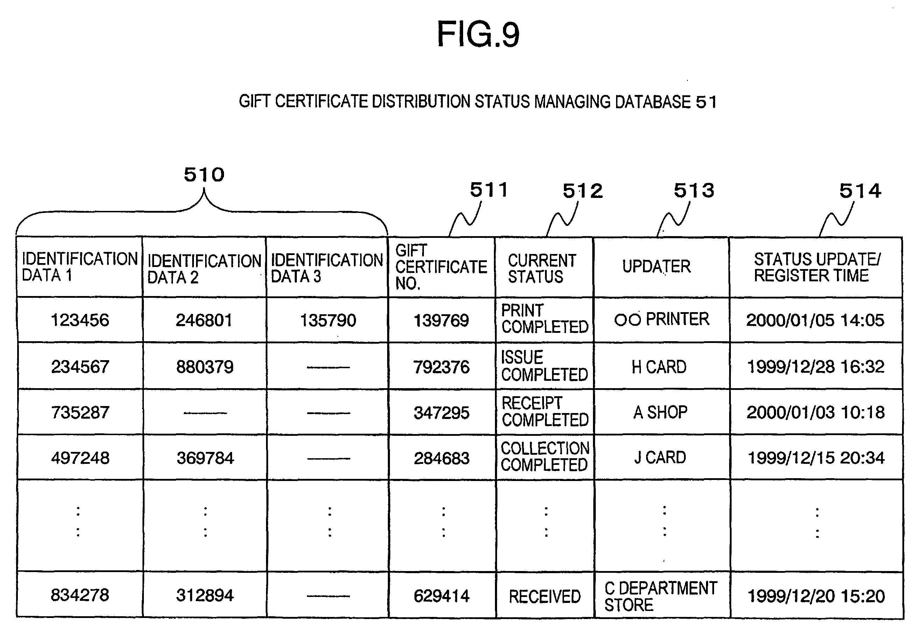

The gift certificate distribution status managing database 51 stores therein the distribution managing information of each gift certificate 100. Fig. 9 is a diagram for explaining the distribution managing information of individual gift certificates 100 to be stored in the gift certificate distribution status managing database 51. As shown, the distribution managing information of each gift certificate 100 is constructed to include: the identification data 510 about the electronic circuit chip 101 mounted in the gift certificate 100; a gift certificate number 511 printed on the face of the gift certificate 100; a current status 512 indicating the distribution status of the gift certificate 100 at this point of time; an updater 513 for specifying the person having last updated the current status 512; and a status update/register time 5143 for specifying the time at which the current status 512 was last updated. Here, the reason why the identification data 510 has three entries is that the three electronic circuit chips 101 at the maximum are mounted according to the face value in the gift certificate 100 of the present embodiment.

In response to the demands from the terminals 1 to 4, the gift certificate information providing unit 52 provides the distribution managing information of the gift certificate 100, as stored in the gift certificate distribution status managing database 51. When the gift certificate information providing unit 52 receives the information provision request containing the identification data and the gift certificate number, from the terminals 1 to 4 through the network 7, for example, the unit 52 retrieves the distribution managing information containing the identification data 510 and the gift certificate number 511 identical to the identification data and the gift certificate number contained in that request, from the gift certificate distribution status managing database 51, and transmits the detected distribution managing information through the network 7 to the terminals 1 to 4 having transmitted that request.

In response to the register requests from the terminals 1 to 4, the gift certificate information managing unit 53 registers/updates the distribution managing information of the gift certificate 100 in the gift certificate distribution status managing database 51. However, the register/update of the distribution managing information of the gift certificate 100 is not carried out unconditionally but it is carried out only on the valid handling of the genuine gift certificate 100.

Specifically, when the gift certificate information managing unit 53 receives the register requests from the terminals 1 to 4, the unit 53 retrieves the distribution managing information containing the identification data 510 and the gift certificate number 511 identical to the identification data and the gift certificate number contained in that request, from the gift certificate distribution status managing database 51. If detected, moreover, the gift certificate information managing unit 53 further checks the current status 512 of the distribution managing information, and registers/updates only the distribution managing information whose the present status 512 is not contradictory to the information contained in the register requests of the terminals 1 to 4

Here, if the distribution managing information containing the identification data 510 and the gift certificate number 511 identical to the identification data and the gift certificate number contained in the received register request is not in the gift certificate distribution status managing database 51, it is highly possible that the gift certificate 100 specified with the identification data and the gift certificate number contained in that request has been fraudulent (e.g., forged) . In this case, the highly possible forgery is reported to the terminals 1 to 4 having transmitted that request.

Even when the distribution managing information containing the identification data 510 and the gift certificate number 511 identical to the identification data and the gift certificate number contained in that request is in the gift certificate distribution status managing database 51, but if the current status 512 of the distribution managing information is contradictory to that request such as the receipt completion register request is received from the receipt procedure terminal 3 although the current status 512 has already been received, it is highly possible that the gift certificate 100 has been fraudulently used (e.g., doubly used) . In this case, the highly possible fraudulent use is reported to the terminals 1 to 4 having transmitted that request.

When the gift certificate information managing unit 53 responds to the receipt completion register request received from the receipt procedure terminal 3, to update the current state 512 of the distribution managing information having the identification data and the gift certificate number contained in that request, to the effect that the gift certificate has been received, the settlement procedure processing unit 54 transmits the settlement request containing the face value data specified with the number of identification data contained in that request and the account data of the gift selling company of the receipt procedure terminal 3 to the settling system 6 through the network 8. In response to that settlement request, the settling system 6 pay the sum of the face value specified by that request, from the account of the selling company of the gift certificate 100 to the account of the gift selling company specified by that request. Here, it is preferable that the account data of the gift selling company is managed in advance by the distribution managing center 5 using a database.

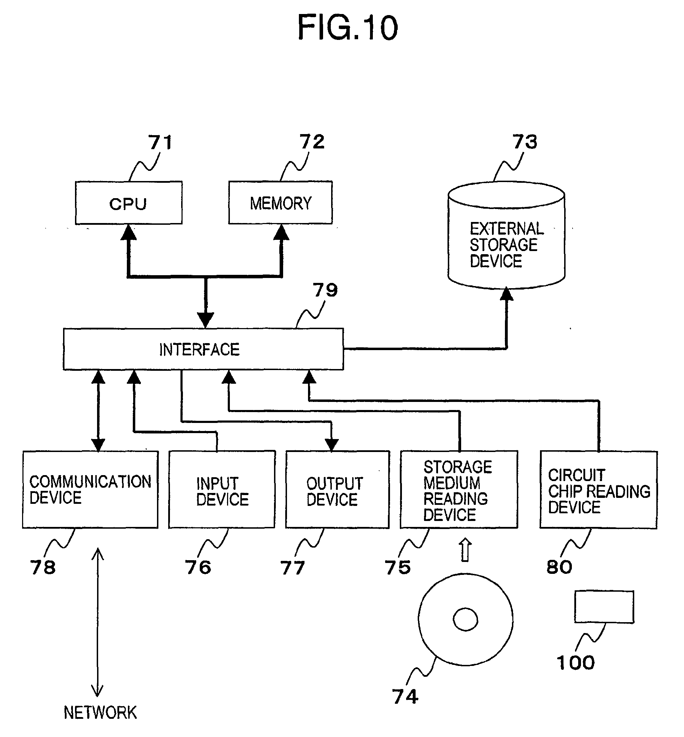

Here, each of the aforementioned terminals 1 to 4 can be constructed, as shown in Fig. 10, over the system comprising: an electronic computer having a general construction provided with a CPU 71, a memory 72, an external storage device 73 such as a hard disk device, a storage medium reading device 75 for reading the data from a storage medium 74 such as FD, CD-ROM or DVD-ROM, an input device 76 such as keyboard or mouse, an output device 77 such as monitor, a communication device 78 for communicating with other devices through the network and an interface 79 for controlling the data transfer between those devices; and an electronic circuit chip reading device 80 for reading the data from the electronic circuit chip 101 mounted in the gift certificate 100.

Here, the read unit 11, the verification unit 12 and the individual processingunits 13 to 43 of the a for ementioned terminals 1 to 4 are realized as the processes embodied over the system, when the CPU 71 executes the programs loaded onto the memory 72. These programs for embodying the terminals 1 to 4 over the system when executed by the CPU 71 are stored in advance in the external storage device 73 and are loaded, if necessary, onto the memory 72 so that they are executed by the CPU 71. Alternatively, the programs are loaded onto the memory 72 from the storage medium 74 through the storage medium reading device 75 so that they are executed by the CPU 71. Still alternatively, the programs are once installed in the external storage device 73 from the storage medium 74 through the storage medium reading device 75 and are then loaded, if necessary, onto the memory 72 from the external storage device 73 so that they are executed by the CPU 71. Moreover, the programs are either once downloaded onto the external storage device 73 from the network through the communication device 78 and then loaded onto the memory 72 or directly loaded onto the memory 72 from the network, so that they are executed by the CPU 71.

In the system shown in Fig. 10the aforementioned distribution managing center 5 can be constructed over the general electronic computer, from which the electronic circuit chip reading device 80 is omitted. Here, the gift certificate information providing unit 52, the gift certificate information managing unit 53 and the settlement procedure processing unit 54 of the aforementioned distribution managing center 5 are realized as a process
embodied over the electronic computer, when the CPU 71 executes the programs loaded onto the memory 72. In this case, moreover, the memory 72 or the external storage device 73 is used as the gift certificate distribution status managing database 51. Like the programs for embodying the aforementioned terminals 1 to 4, the programs for embodying the aforementioned distribution managing center 5 over the electronic computer when executed by the CPU 71 are also stored in advance in the external storage device 73 and are loaded, if necessary, onto the memory 72 so that they are executed by the CPU 51. Alternatively, the programs are loaded onto the memory 72 from the storage medium 74 through the storage medium reading device 75 so that they are executed by the CPU 71. Still alternatively, the programs are once installed in the external storage device 73 from the storage medium 74 through the storage medium reading device 75 and are then loaded, if necessary, onto the memory 72 from the external storage device 73 so that they are executed by the CPU 71. Moreover, the programs are either once downloaded onto the external storage device 73 from the network through the communication device 78 and then loaded onto the memory 72 or directly loaded onto the memory 72 from the network, so that they are executed by the CPU 71.

Next, the operations of the above-described distribution managing system will be explained.

At first the operations of the distribution managing center 5 will be described.

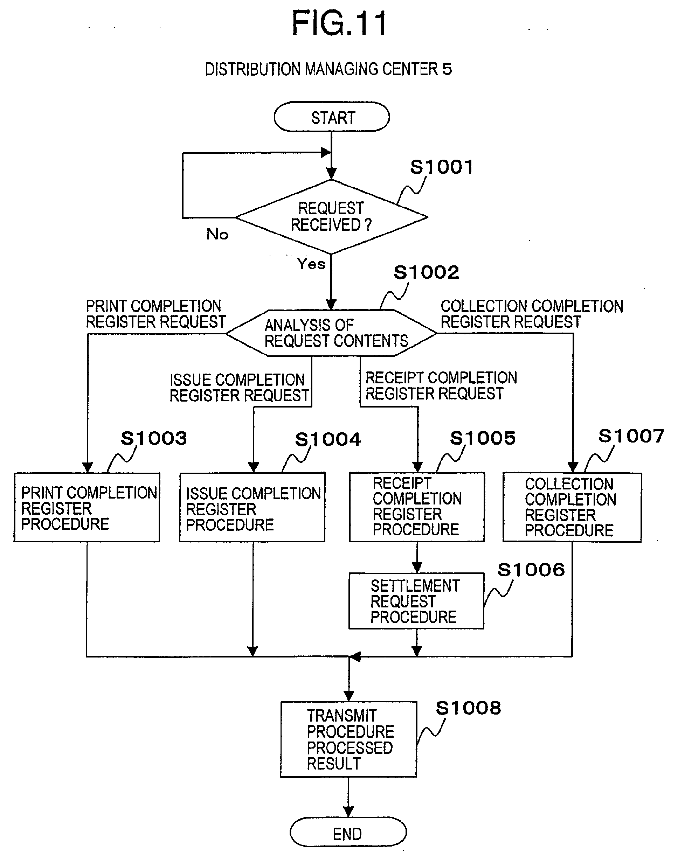

Fig. 11 is a flow chart for explaining the operations of the distribution managing center 5 schematically.

At first, when-receiving a register request from the terminals 1 to 4 through the network 7 (at Step S1001), the gift certificate information managing unit 53 analyzes the request contents (at Step S1002).

Next, the gift certificate information managing unit 53 executes: if the request contents are the print completion register request from the print procedure terminal 1, the later-described print completion register procedure (at Step S1003); if the issue completion register request from the issue procedure terminal 2, the later-described issue completion register procedure (at Step S1004) ; if the receipt completion register request from the receipt procedure terminal 3, the later-described receipt completion register procedure and settlement request procedure (at Steps S1005 and S1006); and if the collection completion register request from the collection procedure terminal 4, the later-described collection completion register procedure (at Step S1007).

Next, when the aforementioned various procedures are ended,the gift certificate information managing unit 53 collects and transmits the processed results to the terminals 1 to 4 having transmitted the register request (at Step S1008).

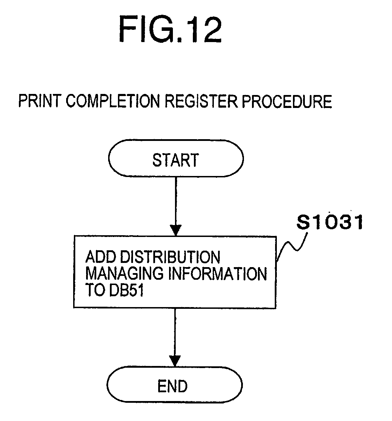

Fig. 12 is a flow chart for explaining the processing of Step S1003 (Print Completion Register Procedure) shown in Fig. 11.

In case the register request is the print completion register request from the print procedure terminal 1, the gift certificate information managing unit 53 creates the distribution managing information, in which the identification data and the gift certificate number contained in that request are the identification data 510 and the gift certificate number 511 and in which the gift certificate printing company of the terminal 1 having transmitted that request is the updater 513, and adds the distribution managing information to the distribution status managing database 51 (at Step S1031). At this time, the current status 512 of the distribution managing information created is updated to the-print completion status, and the status update/register time 514 is updated to the present time.

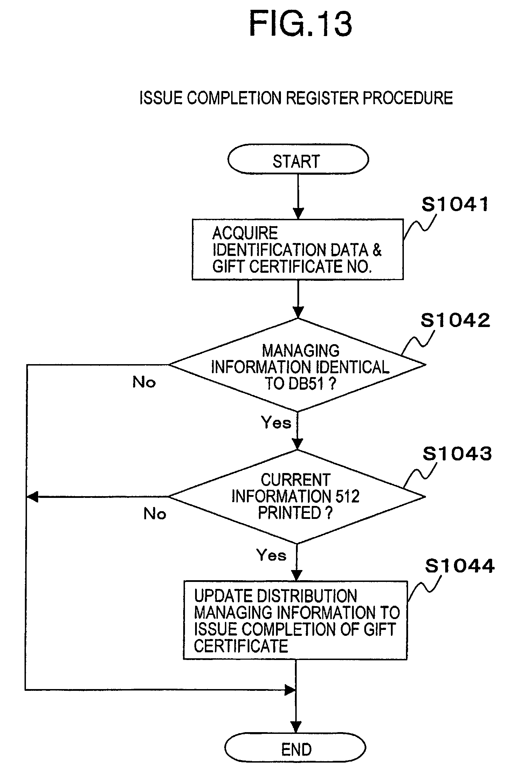

Fig. 13 is a flow chart for explaining the processing of Step S1004 (Issue Completion Register Procedure) shown in Fig. 11.

In case the register request is the issue completion register request from the issue procedure terminal 2, the gift certificate information managing unit 53 acquires the identification data and the gift certificate number contained in that request (at Step S1041). Then, it is checked (at Step S1042) whether or not the distribution managing information, in which the acquired identification data and gift certificate number are the identification data 510 and the gift certificate number 511, is registered in the distribution status managing database 51. If it is registered, it is further checked whether or not the current status 512 of the distribution managing information is the print completion status(at Step S1043). If the current status 512 of the distribution managing information, in which the acquired identification data and gift certificate number are the identification data 510 and the gift certificate number 511, is the print completion status: the current status 512 of the distribution managing information is updated from the print completion status to the issue completion status; the updater 513 of the distribution managing information is updated to the gift certificate issuing company of the terminal 2 having transmitted that request; and the status update/register time 514 of the distribution managing information is updated to the present time (at Step S1044).

If the distribution managing information, in which the identification data and the gift certificate number acquired at Step S1041 are the identification data 510 and the gift certificate number 511, is not registered in the distribution status managing database 51 (that is, if the answer of Step S1042 is No), or if the current status 512 is not the print completion status (that is, if the answer of Step S1043 is No) although the distribution managing information is registered in the distribution status managing database 51, it is highly possible that the gift certificate (i.e., the gift certificate for the issue completion register request) specified with the aforementioned acquired identification data and gift certificate number has been fraudulent (e.g., forged) or fraudulently handled (e.g., doubly issued). In this case, the processing is ended without updating the distribution status managing database 51.

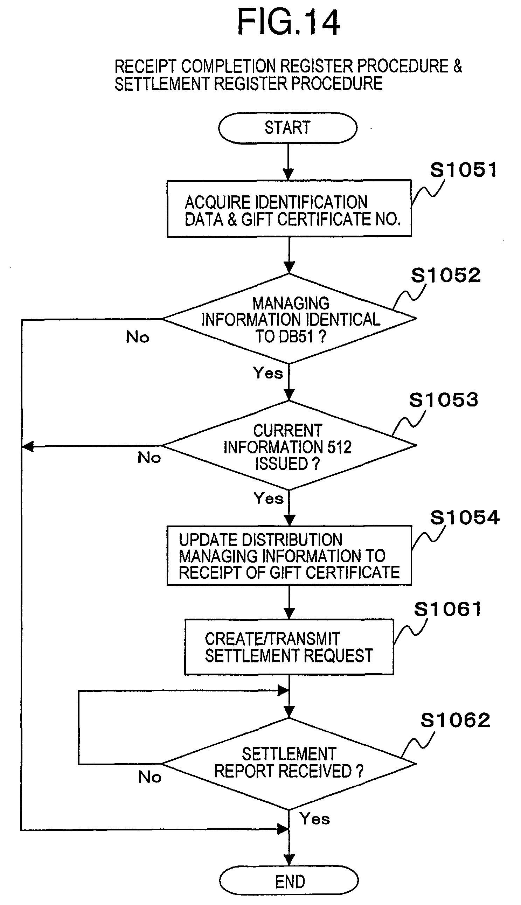

Fig. 14 is a flow chart for explaining the processing of Step S1005 (Receipt completion Register Procedure) and Step S1006 (Settlement Request Procedure) shown in Fig. 11.

If the register request is the receipt completion register request from the receipt procedure terminal 3, the gift certificate information managing unit 53 acquires the identification data and the gift certificate number contained in that request (at Step S1051). It is then checked whether or not the distribution managing information, in which the acquired identification data and gift certificate number are the identification data 510 and the gift certificate number 511, is registered in the distribution status managing database 51 (at Step S1052). If registered, it is further checked whether or not the current status 512 of the distribution managing information has been issued(at Step S1053). If the current status 512 of the distribution managing information, in which the acquired identification data and gift certificate number are the identification data 510 and the gift certificate number 511, has been issued: the current status 512 of that distribution managing information is updated from the issue completion status to the receipt completion status; the updater 513 of that distribution managing information is updated to the gift selling company of the terminal 3 having transmitted that request; and the status update/register time 514 of that distribution managing information is updated to the present time (at Step S1054).

Next, if the distribution managing information is updated at Step S1054, the settlement procedure processing unit 54 creates the settlement request including the face value data (e.g., ¥ 1,000 for one identification data, ¥ 2,000 for two, and ¥ 3,000 for three in the example shown in Fig. 1) specified from the number of the identification data 510 of that distribution managing information and the account data of the gift selling company or the updater 513 of that distribution managing information, and transmits the settlement request to the settling system 6 through the network 8 (at Step S1061). In response to the settlement request, the settling system 6 pays the sum of the face value specified by the settlement request from the account of the gift certificate issuing company to the account of the gift selling company. The settlement procedure processing unit 54 ends the processing when it receives the report indicating the end of the settlement from the settling system 6 (at Step S1062).

Here, a method for settlement in the settling system can be exemplified by a bank credit, a debit or a payment into a bank. In the case of debit settlement, after the gift selling company requested the settlement, the money is instantly paid into the account of the gift selling company so that the gift selling company has an advantage in the money raising point.

If the distribution managing information, in which the identification data and the gift certificate number acquired at Step S1051 are the identification data 510 and the gift certificate number 511, is not registered in the distribution status managing database 51 (that is, if the answer of Step S1052 is No), or if the current status 512 is not the issue completion status (that is, if the answer of Step S1053 is No) although the distribution managing information is registered in the distribution status managing database 51, it is highly possible that the gift certificate (i.e., the gift certificate for the receipt completion register request ) specified with the aforementioned acquired identification data and gift certificate number has been fraudulent (e.g., forged) or fraudulently handled (e.g., doubly used) . In this case, the processing is ended without updating the distribution status managing database 51.

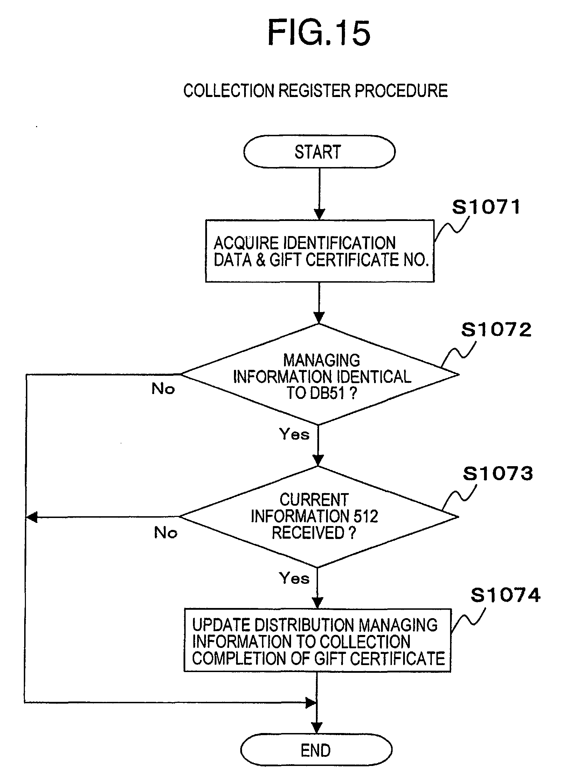

Fig. 15 is a flow chart for explaining the processing of Step S1007 (Collection Completion Register Procedure) shown in Fig. 11.

If the register request is the collection completion register request from the collection procedure terminal 4, the gift certificate information managing unit 53 acquires the identification data and the gift certificate number contained in that request (at Step S1071). It is then checked whether or not the distribution managing information, in which the acquired identification data and gift certificate number are the identification data 510 and the gift certificate number 511, is registered in the distribution status managing database 51 (at Step S1072). If registered, it is further checked whether or not the current status 512 of the distribution managing information has been received (at Step S1073). If the current status 512 of the distribution managing information, in which the acquired identification data and gift certificate number are the identification data 510 and the gift certificate number 511, has been received: the current status 512 of that distribution managing information is updated from the receipt completion status to the collection completion status; the updater 513 of that distribution managing information is updated to the gift certificate collecting company of the terminal 4 having transmitted that request; and the status update/register time 514 of that distribution managing information is updated to the present time (at Step S1074).

If the distribution managing information, in which the identification data and the gift certificate number acquired at Step S1041 are the identification data 510 and the gift certificate number 511, is not registered in the distribution status managing database 51 (that is, if the answer of Step S1072 is No), or if the current status 512 is not the receipt completion status (that is, if the answer of Step S1073 is No) although the distribution managing information is registered in the distribution status managing database 51, it is highly possible that the gift certificate (i.e., the gift certificate for the collection completion register request) specified with the aforementioned acquired identification data and gift certificate number has been fraudulent (e.g., forged) or fraudulently handled (e.g., doubly used) . In this case, the processing is ended without updating the distribution status managing database 51.

Next, the operations of the print procedure terminal 1 will be described.

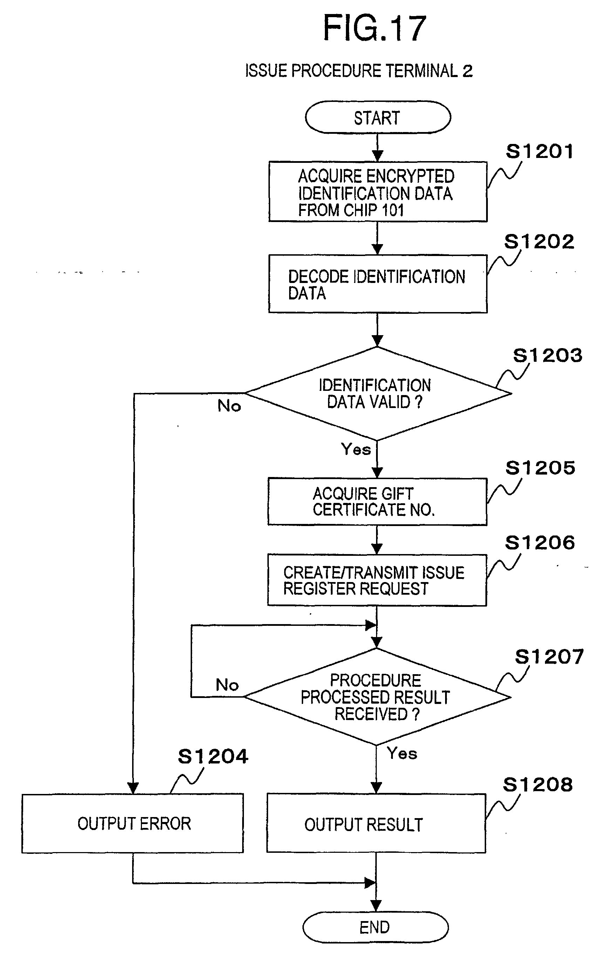

Fig. 16 is a flow chart for explaining the operations of the print procedure terminal 1.

At first, the read unit 11 acquires the encrypted identification data from the electronic circuit chip 101 mounted in the gift certificate 100 (at Step S1101). In case the plural electronic circuit chips 101 are mounted in the gift certificate 100, the encrypted identification data is acquired for all the electronic circuit chips 101.

Next, the verification unit 12 decodes the encrypted identification data acquired by the read unit 11 according to the encryption system which has been used to encrypt that identification data by the manufacturing company of the electronic circuit chip 101 mounted in the gift certificate 100(at Step S1102), and verifies the identification data on the basis of the decoded result. As a result, if the identification data is judged to be genuine (if the answer of Step S1103 is Yes), the print procedure processing unit 13 is requested to execute the processing of the print completion register request procedure. If judged not genuine (if the answer of Step S1103 is No), on the contrary, it is outputted to the output device 77 (at Step S1104) to require the operator of the print procedure terminal 1 to stop the shipping of the gift certificate 100 to the issuing company of the gift certificate.

When request to execute the processing of the print completion register request procedure by the verification unit 12, the print procedure processing unit 13 acquires at first the number 102 of the gift certificate 100 (at Step S1105). Then, the print completion register request containing the identification data decoded at Step S1102, the gift certificate number 102 acquired at Step S1105 and the information on the printing company of the gift certificate is created and transmitted through the network 7 to the distribution managing center 5 (at Step S1106). If the procedure processed result report to the print completion register request is received (at Step S1107), the result is outputted to the output device 77 (at Step S1108) and is reported to the operator of the print procedure terminal 1.

Next the operations of the issue procedure terminal 2 will be described.

Fig. 17 is a flow chart for explaining the operations of the issue procedure terminal 2.

At first, the read unit 11 acquires the encrypted identification data from all the electronic circuit chips 101 mounted in the gift certificate 100 (at Step S1201).

Next, the verification unit 12 decodes the encrypted identification data acquired by the read unit 11, according to the encryption system which has been used to encrypt that identification data by the manufacturing company of the electronic circuit chip 101 mounted in the gift certificate 100(at Step S1202), and verifies the identification data on the basis of the decoded result. As a result, if the identification data is judged to be genuine (if the answer of Step S1203 is Yes), the issue procedure processing unit 23 is requested to execute the processing of the issue completion register request procedure. If judged not genuine (if the answer of Step S1203 is No), on the contrary, it is outputted to the output device 77 (at Step S1204) to require the operator of the issue procedure terminal 2 to stop the issue of the gift certificate 100.

When requested to execute the processing of the issue completion register request procedure by the verification unit 12, the issue procedure processing unit 23 acquires at first the number 102 of the gift certificate 100 (at Step S1205). Then, the issue completion register request containing the identification data decoded at Step S1202, the gift certificate number 102 acquired at Step S1205 and the information on the issuing company of the gift certificate is created and transmitted through the network 7 to the distribution managing center 5 (at Step S1206). If the procedure processed result report in response to the issue completion register request is received from the distribution managing center 5 (at Step S1207), the result is outputted to the output device 77 (at Step S1208) and is reported to the operator-of the issue procedure terminal 2. As a result, the operator of the issue procedure terminal 2 can quickly know whether or not the gift certificate 100 for the aforementioned issue register request can be issued.

Next the operations of the receipt procedure terminal 3 will be described.

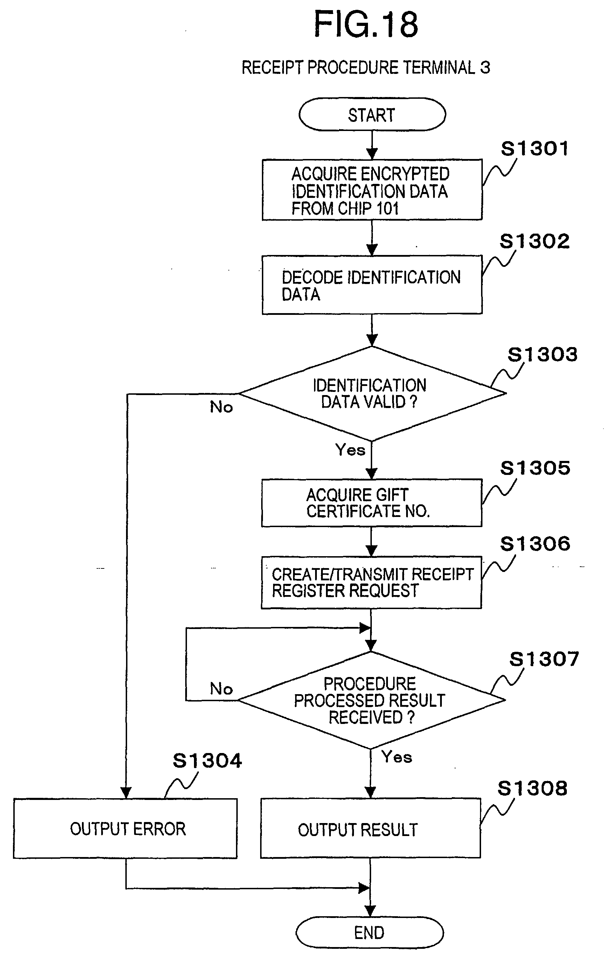

Fig. 18 is a flow chart for explaining the operations of the receipt procedure terminal 3.

At first, the read unit 11 acquires the encrypted identification data from all the electronic circuit chips 101 mounted in the gift certificate 100 (at Step S1301).

Next, the verification unit 12 decodes the encrypted identification data acquired by the read unit 11, according to the encryption system which has been used to encrypt that identification data by the manufacturing company of the electronic circuit chip 101 mounted in the gift certificate 100(at Step S1302), and verifies the identification data on the basis of the decoded result. As a result, if the identification data is judged to be genuine (if the answer of Step S1303 is Yes), the receipt procedure processing unit 33 is requested to execute the processing of the receipt completion register request procedure. If judged not genuine (if the answer of Step S1303 is No), on the contrary, it is outputted to the output device 77 (at Step S1304) to require the operator of the receipt procedure terminal 3 to stop the receipt of the gift certificate 100 for the gift.

When requested to execute the processing of the receipt completion register request procedure by the verification unit 12, the receipt procedure processing unit 33 acquires at first the number 102 of the gift certificate 100 (at Step S1305). Then, the receipt completion register request containing the identification data decoded at Step S1302, the gift certificate number 102 acquired at Step S1305 and the information on the gift selling company is created and transmitted through the network 7 to the distribution managing center 5 (at Step S1306). If the procedure processed result report to the receipt completion register request is received from the distribution managing center 5 (at Step S1307), the result is outputted to the output device 77 (at Step S1308) and is reported to the operator of the receipt procedure terminal 3. As a result, the operator of the receipt procedure terminal 3 can quickly know whether or not the gift certificate 100 for the aforementioned receipt completion register request can be received for the gift.

Next, the operations of the collection procedure terminal 4 will be described.

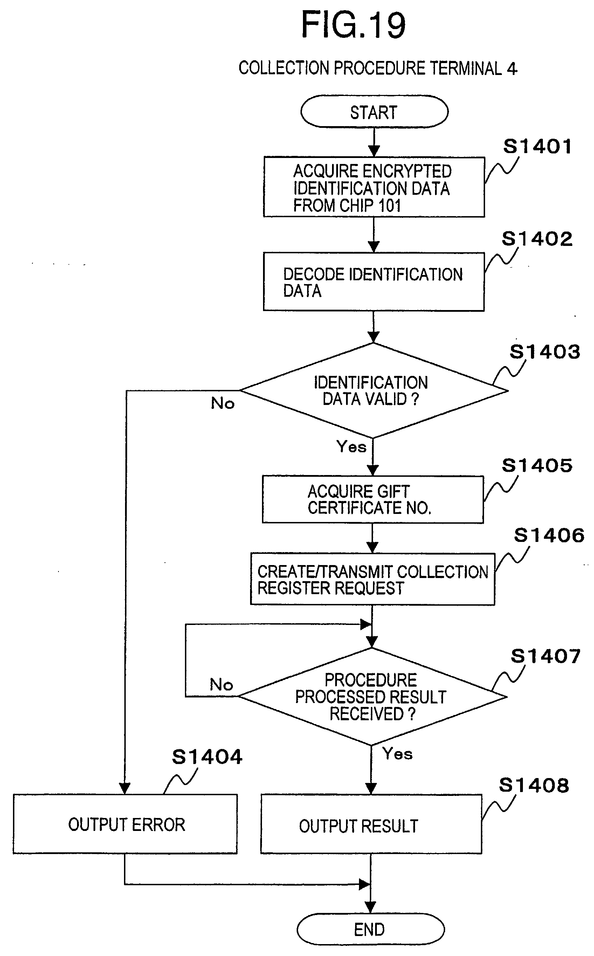

Fig. 19 is a flow chart for explaining the operations of the collection procedure terminal 4.

At first, the read unit 11 acquires the encrypted identification data from all the electronic circuit chips 101 mounted in the gift certificate 100 (at Step S1401).

Next, the verification unit 12 decodes the encrypted identification data acquired by the read unit 11, according to the encryption system which has been used to encrypt that identification data by the manufacturing company of the electronic circuit chip 101 mounted in the gift certificate 100(at Step S1402), and verifies the identification data on the basis of the decoded result. As a result, if the identification data is judged to be genuine (if the answer of Step S1403 is Yes), the collection procedure processing unit 43 is requested to execute the processing of the collection completion register request procedure. If judged not genuine (if the answer of Step S1403 is No), on the contrary, it is outputted to the output device 77 (at Step S1404).

When requested to execute the processing of the collection completion register request procedure by the verification unit 12, the collection procedure processing unit 43 acquires at first the number 102 of the gift certificate 100 (at Step S1405). Then, the collection completion register request containing the identification data decoded at Step S1402, the gift certificate number 102 acquired at Step S1405 and the information on the gift certificate collecting company is created and transmitted through the network 7 to the distribution managing center 5 (at Step S1406). If the procedure processed result report in response to the collection completion register request is received from the distribution managing center 5 (at Step S1407), the result is outputted to the output device 77 (at Step S1308) and is reported to the operator of the collection procedure terminal 4.

Next, the identification data verifications (at Steps S1103, S1203, S1303 and S1403) at the aforementioned verification unit 12 in Figs. 16 to 19 will be described.

Various methods can be conceived as the method for verifying the identification data. The simplest method is to check, when the encrypted identification data acquired by the read unit 11 is decoded according to the encryption system used for encrypting that identification data by the manufacturing company of the electronic circuit chip 101, whether or not the result satisfies the rule used for creating the identification data by that manufacturing company. If characters or symbols other than numerals 0 to 9 are contained in the decoded result when the manufacturing company creates the identification data by using the numerals exclusively, for example, it is highly possible that the identification data stored in the electronic circuit chip 101 has been altered for some reason. In this case, the verification unit 12 is caused to judge that the identification data is fraudulent.

Another method is to use the characteristic value of the identification data. In this method, it is premised that the manufacturing company of the electronic circuit chip 101 is caused to write the characteristic value (e.g., a hash value) of the identification data together with the encrypted identification data, when the encrypted identification data is written in the electronic circuit chip 101. The read unit 11 is caused to read the encrypted identification data and the characteristic value of the identification data from the electronic circuit chip 101, and the verification unit 12 is caused to decode the encrypted identification data to obtain the resultant characteristic value.. If the characteristic value obtained and the characteristic value of the identification data read from the electronic circuit chip 101 are not identical, it is judged that the identification data is fraudulent.

Still another method enumerated is to use the gift certificate number 102 printed on the gift certificate 100. In this method, it is premised that the printing company of the gift certificate 100 is caused to print either the identification data (although not necessarily encrypted, according to this method) stored in the electronic circuit chip 101 mounted in that gift certificate 100 or the characteristic value (e.g., a hash value) of the data, as the number 102 of that gift certificate 100. The verification unit 12 is caused to output either the identification data read by the read unit 11 from the electronic circuit chip 101 or its characteristic value to the output device 77, so that the operator may judge whether or not the identification data or its characteristic value is printed as the gift certificate number 102 in the gift certificate 100 mounted in that electronic circuit chip 101. According to the instruction of the operator inputted to the input device 76, it is judged whether or not the identification data is fraudulent. This is one of the simplest verification methods, although it cannot be used at the print procedure terminal 1, which isthe terminal of the gift certificate printing company to print the gift certificate number 102 on the gift certificate 100.

One embodiment of the present invention has been described hereinbefore.

In the present embodiment, the gift certificate 100 mounts therein the electronic circuit chip 101 which stores the identification data in the nonrewritable area. By using this identification data, therefore, it is possible to verify the gift certificate 100. Here, as the identification data is stored in the nonrewritable area of the electronic circuit chip 201, no fraudulent third party can modify the data stored in the electronic circuit chip101. Moreover, the electronic circuit chip 101 itself cannot be manufactured without sufficient facilities. As the electronic circuit chip 101 is made the smaller and thinner, the restriction is the more on the parties who can manufacture the electronic circuit chip 101. It is, therefore, possible to make the possibility less than the prior art to forge the gift certificate 100.

In the present embodiment, moreover, when the distribution managing center 5 receives the receipt completion register request from the receipt procedure terminal 3, the distribution managing center 5 checks whether or not the issue of the gift certificate 100 requested is registered in the gift certificate distribution managing database 51 and, only if registered, updates the registered contents about the gift certificate 100 from the issue completion status to the receipt completion status. The result of the updating is reported to the receipt procedure terminal 3. Therefore, the gift selling company is enabled to know whether or not the use of the gift certificate 100 is valid, before exchanging the gift with the gift certificate, by reading the identification data from the electronic circuit chip 101 mounted in the gift certificate 100 by using that terminal 3 before the exchange of the gift certificate presented by the gift purchaser with the gift and by transmitting the receipt completion register request containing that data to the distribution managing center 5. Therefore, it is possible to prevent the gift certificate 100 efficiently from being used fraudulently.

In the present embodiment, the distribution managing center 5 is connected through the network 8 with the settling system 6 for money transfers between the accounts of banking organs. For the gift certificate 100 registered as having been received in the gift certificate distribution status managing database 51, the distribution managing center 5 transmits the settlement request containing the account data of the gift selling company of the terminal 3 having transmitted the receipt completion register request , to the settling system 6, and requests this settling system 6 for the money transfers according to the face value of that gift certificate 100 between the accounts of the gift selling company and the gift certificate issuing company. As compared with the prior art, therefore, it is possible to reduce the troubles to be taken for the procedure to cash the gift certificate. It is also possible to shorten the time period from the receipt of the gift certificate 100 by the gift selling company to the cashing of the gift certificate 100.

Here, the present invention is not be limited to the embodiment thus far described but can be modified in various manners within the scope of its gist.

In the aforementioned embodiment, for example, the distribution managing center 5 need not always be constructed over one device. For example, the construction may be modified such that the portion relating to the information managing or providing procedure of the gift certificate 100 and the portion relating to the settling procedure may be constructed over different devices, and they may be wconnected through a network. On the contrary, the distribution managing center 5 may be given the function as the settling system 6 so that the distribution managing center 5 and the settling system 6 may be constructed over one device.

The foregoing embodiment has been described on the case in which the procedures shown in Figs. 16 to 19 are executed at the individual terminals 1 to 4 for each gift certificate 100 so that the various register requests are transmitted to the distribution managing center 5. However, the present invention is not be limited to that embodiment. The transmissions of the various register requests may be performed by gathering the requests for plural gift certificates 100, i.e., in a batch. For example, the requests for plural of gift certificates 100 handled for a predetermined period (e.g., one day) may be transmitted in a batch. At this time, the local verifications (i.e., S1103, S1203, S1303 and S1403 in Figs. 16 to 19) at the individual terminals 1 to 4 may be corrected, as follows. In the distribution managing center 5, the identification data of the electronic circuit chip 101, which has been judged to be fraudulent in the verifications in response to the various register requests from the individual terminals 1 to 4, is registered in a blacklist, then the blacklist is transmitted to the individual terminals 1 to 4 periodically or in response to the requests from the individual terminals 1 to 4. Each of the terminals 1 to 4 checks it in its local verification whether or not the identification data of the electronic circuit chip 100 mounted in the gift certificate 100 to be verified has been registered in the blacklist acquired from the distribution managing center 5 and, if registered, judges that the identification data is fraudulent.

The Receipt completion Register Procedure and the settlement request procedure at the distribution managing center 5 shown in Fig. 14 have been described on the case in which the Receipt completion Register Procedure and the settlement request procedure are continuously processed for each gift certificate 100. However, the settlement request procedures may be performed altogether, i.e., in the batch after the Receipt completion Register Procedures of the plural gift certificates 100 were ended.

In the aforementioned embodiment, moreover, the number of electronic circuit chips 101 to be mounted is changed depending on the face value of the gift certificate 100, as shown in Fig. 1. However, the present invention is not be limited to this. In case the number of electronic circuit chips 101 to be mounted in the gift certificate 100 is fixed regardless of the face value, this face value of the gift certificate has to be managed in the distribution managing center 5. This management can be carried out such that the print procedure terminal 1 transmits the print completion register request containing the face value of the gift certificate and the distribution managing center 5 registers in the gift certificate distribution status managing database 51 the various pieces of information containing the face value of the gift certificate contained in the print completion register request.

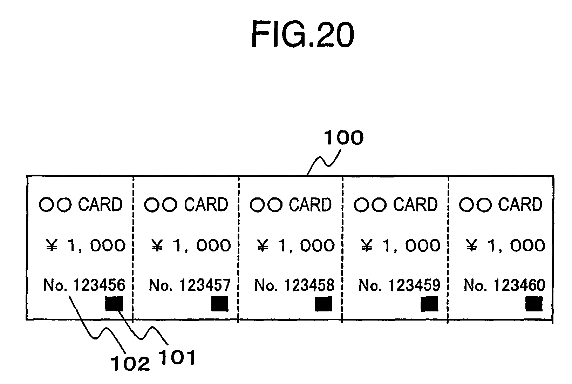

Moreover, the form of the gift certificate 100 is not be limited to that shown in Fig. 1. As shown in Fig. 20, for example, the gift certificate 100 may be so constructed that it can be divided in the unit of a predetermined face value and that the electronic circuit chip 101 is mounted in each division unit. With this construction, a sheet of gift certificate of a high value can be divided into a plurality of gift certificates of a low value and thereby enhances the conveniences of the user.

In the a for ementioned embodiment, the gift certificate 100 is specified in the distribution managing center 5 in combination of the identification data 510 and the gift certificate number 511, as shown in Fig. 9. , The gift certificate 100 may be specified, however, by using only the identification data 510 to manage its distribution state.

Although the foregoing embodiment has been described by exemplifying the gift certificate which can be exchanged with the gift having the value identical to the face value printed on the paper facethe present invention can be widely applied to other gift certificates such as beer tickets, book tickets or card type gift certificates.

As has been described hereinbefore, according to the present invention, the genuineness of the gift certificate can be judged more reliably than the visual inspection of the prior art and prevent fraudulent use of the gift certificate efficiently. Further, the troubles to be taken for cashing the gift certificate can be reduced and shorten the time period from the receipt of the gift certificate to the cashing of the same.

## Claims

1. A gift certificate distribution managing method for managing the distribution of a gift certificate by using a gift certificate distribution managing system including:
a gift certificate issuer side terminal; a gift seller side terminal which allows a gift purchaser to use the gift certificate; and a gift certificate distribution managing center connected with said issuer side terminal and said seller side terminal through a network, wherein
said gift certificate has an electronic circuit chip mounted therein, which stores an externally readable data; and
said electronic circuit chip mounted in said gift certificate has a nonrewritable storage area in which a data specific to said electronic circuit chip is stored as said externally readable data;
said distribution managing center executes:
an issue completion registering step of registering in a database the gift certificate specified by the data specific to said electronic circuit chip as an issue-completed gift certificate that has been issued when said distribution managing center receives an issue completion register request containing the data specific to said electronic circuit chip from said issuer side terminal; and
a receipt completion registering step of checking when said distribution managing center receives a receipt completion register request containing the data specific to said electronic circuit chip from said seller side terminal, whether or not the gift certificate specified by the data specific to said electronic circuit chip is registered in said database as the issue-completed gift certificate; only if registered, updating the registered contents of said gift certificate in said database from a issue completion status to a receipt completion status; and reporting the updating to said seller side terminal.

2. A gift certificate distribution managing method as set forth in Claim 1, whereinsaid gift certificate distribution managing system includes a gift certificate printer side terminal connected with said distribution managing center through said network; and
said distribution managing center further executes a print completion registering step of registering in a database the gift certificate specified by the data specific to said electronic circuit chip as a print-completed gift certificate that has been printed, when said distribution managing center receives a print completion register request containing the data specific to said electronic circuit chip from said printer side terminal, ; and
said issue completion registering step checks when said distribution managing center receives the issue completion register request containing the data specific to said electronic circuit chip from said issuer side terminal, whether or not the gift certificate specified by the data specific to said electronic circuit chip is registered as the print-completed gift certificate in said database; only if registered, updating the registered contents of said gift certificate in said database from the print completion status to the issue completion status; and reports the updating to said issuer side terminal.

3. A gift certificate distribution managing method as set forth in Claim 1, wherein
said gift certificate distribution managing system includes a gift certificate collector side terminal connected with said distribution managing center through said network, and collecting the gift certificate which has been received by the gift seller; and
said distribution managing center further executes a receipt completion registering step of checking , when said distribution managing center receives a collection completion register request containing the data specific to said electronic circuit chip from said collector side terminal, whether or not the gift certificate specified by the data specific to said electronic circuit chip is registered as the receipt-completed gift certificate in said database; only if registered, updating the registered contents of said gift certificate in said database from the receipt completion status to the collection completion status; and reports the updating to said collector side terminal.

4. A gift certificate distribution managing method as set forth in Claim 1, wherein:
said gift certificate distribution managing system is connected through said network with a settling system for money transfers between accounts of banking organs; and
said distribution managing center further executes a settlement requesting step of transmitting a settlement request for said gift certificate, containing data for specifying the account of a gift seller having transmitted the gift certificate receipt completion register request by using said seller side terminal, to said settling system when the gift certificate registered in said database is updated from the issue completion status to the receipt completion status, and requesting said settling system for the money transfer according to face value of said gift certificate, between the account of said gift seller and the account of said gift certificate issuer.

5. A gift certificate distribution managing method for managing the distribution of a gift certificate by using a gift certificate distribution managing system including a gift certificate printer side terminal and a gift certificate distribution managing center connected with said printer side terminal through a network, wherein:
said gift certificate mounts therein an electronic circuit chip, which stores an externally readable data;
the electronic circuit chip mounted in said gift certificate has a nonrewritable storage area in which a data specific to said electronic circuit chip is stored as said externally readable data; and
said printer side terminal executes:
a reading step of acquiring the data specific to said electronic circuit chip from the electronic circuit chip mounted in the gift certificate; and
a print completion register requesting step of transmitting a print completion register request containing the data specific to said electronic circuit chip that was acquired at said reading step , to said distribution managing center, and registering the print completion register request in said distribution managing center in a manner that it is understandable that the gift certificate specified by the data specific to said electronic circuit chip has been printed.

6. A gift certificate distribution managing method as set forth in Claim 5, wherein:
the data stored in the electronic circuit chip mounted in said gift certificate and specific to said electronic circuit chip is encrypted;
said reading step decodes the data read from the electronic circuit chip mounted in the gift certificate, and verifies said gift certificate on the basis of the result of the decoding; and
said print completion register requesting step is executed only when it is judged at said reading step that the gift certificate is genuine.

7. A gift certificate distribution managing method for managing the distribution of a gift certificate by using a gift certificate distribution managing system including a gift certificate issuer side terminal and a gift certificate distribution managing center connected with said issuer side terminal through a network, wherein:
said gift certificate mountes therein an electronic circuit chip, whichstores an externally readabledata
the electronic circuit chip mounted in said gift certificate has a nonrewritable storage area in which a data specific to said electronic circuit chip is stored as said externally readable data; and
said issuer side terminal executes:
a reading step of acquiring the data specific to said electronic circuit chip from the electronic circuit chip mounted in an issued gift certificate; and
an issue completion register requesting step of transmitting an issue completion register request containing the data specific to said electronic circuit chip that was acquired at said reading step , to said distribution managing center, and registering the issue completion register request in said distribution managing center in a manner that it is understandable that the gift certificate specified by the data specific to said electronic circuit chip has been issued.

8. A gift certificate distribution managing method as set forth in Claim 7, wherein:
the data stored in the electronic circuit chip mounted in said gift certificate and specific to said electronic circuit chip is encrypted;
said reading step decodes the data read from the electronic circuit chip mounted in the gift certificate, and verifies said gift certificate on the basis of the result of the decoding; and
said print completion register requesting step is executed only when it is judged at said reading step that the gift certificate is genuine.

9. A gift certificate distribution managing method as set forth in Claim 7, wherein:
the information capable of discriminating the data stored in the electronic circuit chip mounted in said gift certificate and specific to said electronic circuit chip is printed on the sheet face of said gift certificate;
said reading step presents the data read from the electronic circuit chip mounted in the gift certificate, to the operator of said issuer side terminal; and
said issue completion register requesting step is executed when instructed by the operator of said issuer side terminal.

10. A gift certificate distribution managing method for managing the distribution of a gift certificate by using a gift certificate distribution managing system including:
a gift seller side terminal for allowing a gift purchaser to use the gift certificate; and a gift certificate distribution managing center connected with said seller side terminal through a network, wherein
said gift certificate has an electronic circuit chip mounted therein, which stores an externally readable data;
the electronic circuit chip mounted in said gift certificate has a nonrewritable storage area in which a data specific to said electronic circuit chip is stored as said externally readable data; and
said seller side terminal executes:
a reading step of acquiring the data specific to said electronic circuit chip from the electronic circuit chip mounted in the gift certificate used for a gift by the gift purchaser; and
a receipt completion register requesting step of transmitting a receipt completion register request containing the data specific to said electronic circuit chip that was acquired at said reading step, to said distribution managing center, and registering the receipt completion register request in said distribution managing center in a manner that it is understandable that the gift certificate specified by the data specific to said electronic circuit chip has been received.

11. A gift certificate distribution managing method as set forth in Claim 10, wherein:
the data stored in the electronic circuit chip mounted in said gift certificate and specific to said electronic circuit chip is encrypted;
said reading step decodes the data read from the electronic circuit chip mounted in the gift certificate, and verifies said gift certificate on the basis of the result of the decoding; and
said print completion register requesting step is executed only when it is judged at said reading step that the gift certificate is genuine.

12. A gift certificate distribution managing method as set forth in Claim 10, wherein:
information capable of discriminating the data specific to said electronic circuit chip that is stored in the electronic circuit chip mounted in said gift certificate is printed on the sheet face of said gift certificate;
said reading step presents the data read from the electronic circuit chip mounted in the gift certificate, to an operator of said seller side terminal; and
said issue completion register requesting step is executed when instructed by the operator of said seller side terminal.

13. A gift certificate distribution managing method for managing the distribution of a gift certificate by using a gift certificate distribution managing system including:
a gift certificate collector side terminal which collects the gift certificate received by a gift seller; and a gift certificate distribution managing center connected with said collector side terminal through a network, wherein:
said gift certificate has an electronic circuit chip mounted therein, which stores an externally readable data;
the electronic circuit chip mounted in said gift certificate has a nonrewritable storage area in which a data specific to said electronic circuit chip is stored as said externally readable data; and
said collector side terminal executes:
a reading step of acquiring the data specific to said electronic circuit chip from the electronic circuit chip mounted in the collected gift certificate; and
a collection completion register requesting step of transmitting a collection completion register request containing the data specific to said electronic circuit chip acquired at said reading step , to said distribution managing center, and registering the collection completion register request in said distribution managing center in a manner that it is understandable that the gift certificate specified by the data specific to said electronic circuit chip has been collected.

14. A gift certificate distribution managing method as set forth in Claim 13, wherein:
the data stored in the electronic circuit chip mounted in said gift certificate and specific to said electronic circuit chip is encrypted;
said reading step decodes the data read from the electronic circuit chip mounted in the gift certificate, and verifies said gift certificate on the basis of the result of the decoding; and
said print completion register requesting stepis executed only when it is judged at said reading step that the gift certificate is genuine.

15. A gift certificate distribution managing method as set forth in Claim 13, wherein:
information capable of discriminating the data specific to said electronic circuit chip that is stored in the electronic circuit chip mounted in said gift certificate d is printed on the sheet face of said gift certificate;
said reading step presents the data read from the electronic circuit chip mounted in the gift certificate, to an operator of said collector side terminal; and
said issue completion register requesting step is executed when instructed by the operator of said collector side terminal.

16. A distribution managing center connected and used with a net work which manages the distribution of a gift certificate, wherein:
said gift certificate has an electronic circuit chip mounted therein, which stores an externally readable data, and said electronic circuit chip stores data specific to said electronic circuit chip as said externally readable data in a nonrewritable storage area; and
said distribution managing center comprises:
storage means which stores a database for registering the distribution status of the gift certificate;
communication means which communicats with a terminal connected with said network;
issue completion registering means which registers in said database the gift certificate specified by the data specific to said electronic circuit chip as an issued-completed gift certificate(that has been issued), when it receives an issue completion register request containing the data specific to said electronic circuit chip by said communication means from a gift certificate issuer side terminal, ;
receipt completion registering means for: checking when it receives a receipt completion register request containing the data specific to said electronic circuit chip by said communication means from a gift seller side terminal for allowing a gift purchaser to use the gift certificate, whether or not the gift certificate specified by the data specific to said electronic circuit chip is registered in said database as the issue-completed gift certificate; and only if registered, updating the registered contents of said gift certificate in said database from the issue completion status to the receipt completion status; and
reporting means which reports by using said communication means result of the registration of said issue completion register request in said issue completion registering means to said issuer side terminal having transmitted said request and reports the result of the registration of said receipt completion register request in said receipt completion registering means to said seller side terminal having transmitted said request.

17. A distribution managing center as set forth in Claim 16, wherein:
said distribution managing center further comprises print completion registering means which registers in said database the gift certificate specified by the data specific to said electronic circuit chip as a print-completed gift certificate that has been printed, when a print completion register request containing the data specific to said electronic circuit chip is transmitted by said communication means from a gift certificate printer side terminal;
said reporting means reports by using said communication means the result of the registration of said print completion register request in said print completion registering means to said printer terminal having transmitted said request; and
said receipt completion registering means checks, when it receives an issue completion register request containing the data specific to said electronic circuit chip by said communication means from said issuer side terminal, whether or not the gift certificate specified by the data specific to said electronic circuit chip is registered in said database as the print-completed gift certificate and, only if registered, updates the registered contents of said gift certificate in said database from the print completion status to the issue completion status.

18. A distribution managing center as set forth in Claim 16, wherein:
said distribution managing center further comprises collection completion registering means which checks, when it receives a collection completion register request containing the data specific to said electronic circuit chip by said communication means from a gift certificate collector side terminal for collecting the gift certificate received by the gift seller, whether or not the gift certificate specified by the data specific to said electronic circuit chip is registered in said database as the receipt completed gift certificate that has been received; and only if registered, updating the registered contents of said gift certificate in said database from the receipt completion status to the collection completion status; and
said reporting means reports by using said communication means the result of the registration of said collection completion register request in said collection completion registering means to said collection side terminal having transmitted said request.

19. A gift certificate issuer side terminal connected and used with a network for issuing a gift certificate, wherein:
said gift certificate has an electronic circuit chip mounted therein, which stores an externally readable data in and data specific to said electronic circuit chip is stored as said externally readable datain a nonrewritable storage area; and
said issuer side terminal comprises:
communication means which communicates with a distribution managing center managing the distribution of a gift certificate, through a network;
reading means which acquires data specific to the electronic circuit chip mounted in the gift certificate, from said electronic circuit chip; and
issue completion register requesting means which transmits an issue completion register request containing the data specific to said electronic circuit chip acquired by said reading means , to said distribution managing center by using said communication means, and registes the issue completion register request in said distribution managing center in a manner that it is understandable that the gift certificate specified by the data specific to said electronic circuit chip has been issued.

20. A gift seller side terminal connected and used with a network for allowing a gift purchaser to use a gift certificate, wherein:
said gift certificate has an electronic circuit chipmounted therein, which stores an externally readable data , and data specific to said electronic circuit chip is stored as said externally readable data in a nonrewritable storage area; and
said seller side terminal comprises:
communication means which communicates with a distribution managing center for managing the distribution of a gift certificate, through a network;
reading means which acquires data specific to the electronic circuit chip mounted in the gift certificate, from said electronic circuit chip; and
receipt completion register requesting means which transmits a receipt completion register request containing the data specific to said electronic circuit chip acquired by said reading means , to said distribution managing center by using said communication means, and registers the receipt completion register request in said distribution managing center in a manner that it is understandable that the gift certificate specified by the data specific to said electronic circuit chip has been received.

21. A gift certificate comprising an electronic circuit chip mounted therein, which stores an externally readabledata , wherein:
data specific to said electronic circuit chip is stored in a nonrewritable storage area of said electronic circuit chip as the externally readable data.

22. A gift certificate as set forth in Claim 21, wherein:
on the sheet face of said gift certificate printed is information which is capable of discriminating the data stored in the electronic circuit chip mounted in said gift certificate and specific to said electronic circuit chip.

23. A gift certificate as set forth in Claim 21, wherein:
a plurality of said electronic circuit chips are mounted according to the face value of said gift certificate.

24. A gift certificate as set forth in Claim 21, wherein:
said gift certificate is constructed in a manner that it is dividable by a predetermined face value unit; and said electronic circuit chip is mounted in each division unit.
